## Europäisches Patentamt

(19) **European Patent Office**

**Office européen des brevets**

(11) Publication number: **0 200 335**
**B1**

(12) # EUROPEAN PATENT SPECIFICATION

(45) Date of publication of the patent specification:
**15.11.89**

(51) Int. Cl.⁴: **F16H 45/02, F16H 47/06**

(21) Application number: **86302068.1**

(22) Date of filing: **20.03.86**

(54) Torque converter disconnect & bypass clutch structure for automatic mechanical transmission.

(30) Priority: **03.04.85 US 719180**

(43) Date of publication of application:
**10.12.86 Bulletin 86/45**

(45) Publication of the grant of the patent:
**15.11.89 Bulletin 89/46**

(84) Designated Contracting States:
**DE FR GB IT SE**

(56) References cited:
**EP-A- 0 040 794**
**WO-A-84/03340**
**FR-A- 2 535 002**
**GB-A- 2 118 643**
**US-A- 4 023 443**
**US-A- 4 066 157**
**US-A- 4 140 031**
**US-A- 4 226 295**
**US-A- 4 261 216**
**US-A- 4 375 171**

**ZF-Transmatik, Beschreibung, Bedienung, Wartung
F1/13 ZFF 747, 510, publ. 10/1974**

(73) Proprietor: **EATON CORPORATION, Eaton
Center, 1111 Superior Avenue, Cleveland
Ohio 44114(US)**

(72) Inventor: **Morscheck, Timothy John, 5317 Burning Tree,
Kalamazoo Michigan 49002(US)**

(74) Representative: **Douglas, John Andrew, Eaton House
Staines Road, Hounslow Middlesex TW4 5DX(GB)**

## Description

## BACKGROUND OF THE INVENTION

### Field of the Invention

The present invention relates to automatic mechanical transmission systems including a throttle controlled engine, a mechanical change gear transmission and a fluid coupling, such as torque converter, interposed the engine and transmission. In particular, the present invention relates to a torque converter disconnect and by-pass clutch structure for such system. More particularly, the present invention relates to a torque converter disconnect and by-pass clutch structure for an automatic mechanical transmission system utilizing a mechanical change gear transmission and a power synchronizer mechanism.

### Description of the Prior Art

Mechanical change gear transmissions, i.e. transmissions shifted by engaging selected positive jaw clutches, as opposed to friction clutches, are well known in the art. Examples of such transmissions may be seen by reference to United States Patent Nos. 3,105,395; 3,611,823; 4,152,949 and 4,194,410, the disclosures of which are hereby incorporated by reference.

Automatic mechanical transmission systems comprising mechanical transmissions and controls and actuators to automatically shift same, usually electronically controlled in accordance with sensed inputs and predetermined logic rules, are known. Examples of such systems may be seen by reference to United States Patent Nos. 4,361,060; 4,140,031 and 4,081,065, the disclosures of which hereby incorporated by reference. Such systems may also be seen by reference to SAE Paper No. 831776 titled "AUTOMATED MECHANICAL TRANSMISSION CONTROLS", the disclosure of which is hereby incorporated by reference.

Automatic transmission systems including a torque converter drivingly interposed a drive engine and a mechanical change gear transmission and/or including torque converter by-pass or lockup devices are also known as may be seen by reference to U.S. Patent Nos. 3,593,596; 4,261,216; 4,271,724; 4,351,205 and 4,375,171, the disclosures of which are hereby incorporated by reference.

Automatic mechanical transmission systems utilizing power synchronizer devices, i.e. devices independent of engine speed to provide input shaft braking and acceleration, and not manipulation of engine speed, to synchronize the transmission jaw clutch members are known in the prior art. The acceleration portions of such devices are often output shaft driven through a speed increasing gear train and/or driven by an auxiliary motor. Examples of such systems may be seen by reference to United States Patent Nos. 3,478,851, 4,023,443 and 4,140,031, the disclosures of which are hereby incorporated by reference.

While automatic transmission are well known and widely used in many applications, automatic transmissions, especially for use in heavy duty vehicles such as heavy trucks, are not totally satisfactory as the same, or substantially the same, transmission was not usable, with a minimum of modification, for both manual and automatic use, the advantages of torque converter starting and a non-slipping connection between the engine and transmission at higher vehicle speed/drive ratios was not available and/or the speed of synchronizing the positive jaw clutches was limited to the response times of the engine.

## SUMMARY OF THE INVENTION

In accordance with the present invention as defined in claims 1 and 11, the drawbacks of the prior art are minimized or overcome by the provision of an automatic mechanical transmission system utilizing a mechanical change gear transmission of a structure identical or substantially identical to the structure of transmissions intended for manual usage, providing the advantages of a torque converter for vehicle start-ups and the advantages of non-slipping connection between the engine and transmission at higher vehicle speeds/gear ratios and providing relatively rapid synchronization of the transmission positive jaw clutches.

The above is accomplished by providing an automatic mechanical transmission system based upon the same, or substantially the same, mechanical change gear transmission utilized for manual transmission systems. This does, of course, allow the same basic transmission to be utilized for both manual and automatic transmission systems and results in manufacturing, inventory and maintenance cost savings. To the transmission is added, if necessary, shifting mechanisms suitable for automatic control by solenoids or the like. An example of such a shifting mechanism may be seen by reference to above-mentioned U.S. Patent No. 4,360,060 and U.S. Patent No. 4,445,393, the disclosure of which is hereby incorporated by reference. A power synchronizer mechanism as disclosed in above-mentioned U.S. Patent No. 3,478,851 or 4,023,443 is also added for synchronizing the transmission positive jaw clutches. It has been found, by way of example, that in one typical compound, nine-speed mechanical change gear transmission equipped with a power synchronizer mechanism, the input shaft may be accelerated and decelerated, for downshifts and upshifts, respectively, at about 2000 RPM/second. This compares very favorably with the expected rates of about 1500 RPM/second and 700 RPM/second, for acceleration and deceleration, respectively, of a transmission input shaft by utilizing only engine speed manipulation. Additionally, when utilizing a power synchronizer mechanism, the input shaft speed is not limited to the maximum governed engine speed as is the case when synchronizing with engine speed manipulation. WO 84/03340 and GB-A 2 118 643 show other fluid coupling/clutch structures.

A torque converter is drivingly interposed the drive engine and transmission. A torque converter disconnect and by-pass clutch structure is provided comprising a first and a second separate, independently operable, clutches, preferably friction clutches, for coupling the torque converter driven member or turbine to the transmission input shaft and for coupling the torque converter input or impeller (i.e. the engine output) to the transmission input shaft, respectively.

The torque converter is drivingly interconnected between the engine and transmission only when the first coupling is engaged and the second disengaged. The torque converter is by-passed, i.e. the transmission driven directly from the engine, whenever the second clutch is engaged, regardless of the condition of the first clutch.

When both the first and second couplings are disengaged, the transmission input shaft is disconnected from the engine torque and also from the inertia of the torque converter allowing the jaw clutches to be easily disengaged, the power synchronizer mechanism to act quickly due to relatively low inertia on the input shaft and also allowing a selected gear to be pre-engaged with the vehicle at rest and in the drive condition.

FR-A-2 535 002 discloses a semi-automatic transmission having the coupling structure as mentioned in the pre-characterizing portion of Claim 1 and 11. However, the two clutches are not independently selectable as regards engagement, and the connecting member of the reference is a torsion damper.

Accordingly, it is an object of the present invention to provide a new and improved automatic mechanical transmission system.

Another object of the present invention is to provide a new and improved automatic mechanical transmission system utilizing a torque converter drivingly interposed the engine and mechanical transmission and further utilizing a torque converter disconnect and by-pass clutch structure.

These and other objects and advantages of the present invention as defined in the claims will become apparent from a reading of the description of the preferred embodiment taken with the drawings.

## BRIEF DESCRIPTION OF THE DRAWINGS

Figure 1 is a schematic view of the torque converter and torque converter disconnect and by-pass clutch structure of the present invention.

Figure 2 is a schematic illustration of the automatic mechanical transmission system of the present invention.

Figure 3, which is shown in two portions, 3A and 3B, is a partial view, in section, of the automatic mechanical transmission system of the present invention.

## DESCRIPTION OF THE PREFERRED EMBODIMENT

Certain terminology will be used in the following description for convenience and reference only and will not be limiting. The words "upwardly", "downwardly", "rightwardly" and "leftwardly" will designate directions in the drawings to which reference is made. The words "inwardly" and "outwardly" will refer to directions toward and away from, respectively, the geometric center of the described device and/or designated parts thereof. Said terminology will include the words above specifically mentioned, derivatives thereof, and words of a similar import.

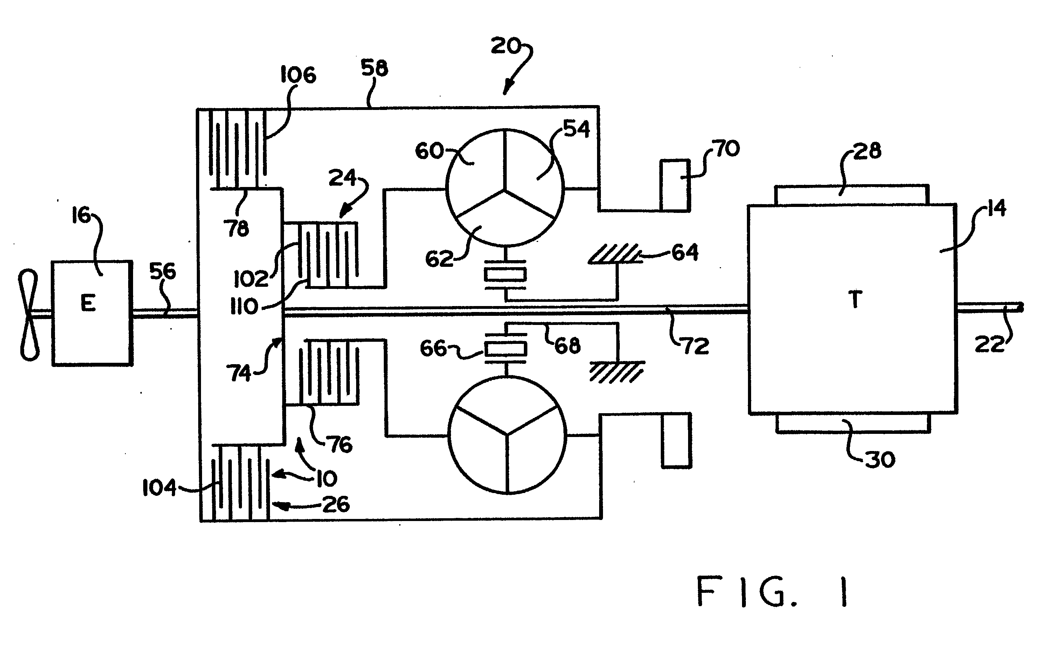

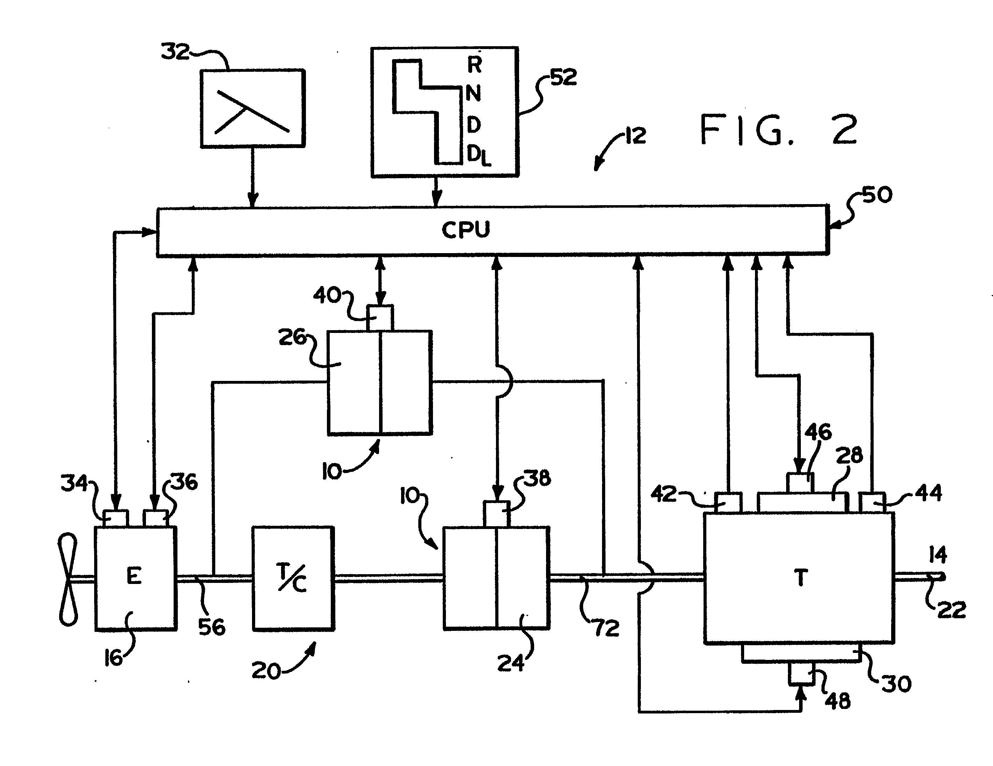

The torque converter disconnect and by-pass clutch assembly 10 of the present invention, and an automatic mechanical transmission system 12 utilizing same, are schematically illustrated in Figures 1 and 2. The term "automatic mechanical transmission system" as used herein, shall mean a system comprising at least a throttle device controlled heat engine, a multi-speed jaw clutch type change gear transmission, a non-positive coupling device such as a master friction clutch and/or a fluid coupling interposed the engine and the transmission and a control unit for automatically controlling same. Such systems will, of course, also include sensors and/or actuators for sending input signals to and/or receiving command output signals from the control unit.

The automatic mechanical transmission system 12 of the present invention is intended for use on a land vehicle, such as a heavy duty truck, but is not limited to such use. The automatic mechanical transmission system 12 illustrated includes an automatic multi-speed mechanical change gear transmission 14 driven by a prime mover throttle device controlled engine 16 (such as a diesel engine) through a fluid coupling or torque converter assembly 20. The output of the automatic transmission 14 is an output shaft 22 which is adapted for driving connection to an appropriate vehicle component such as the differential of a drive axle, a transfer case, or the like as is well known in the prior art.

As will be discussed in greater detail below, the torque converter disconnect and by-pass clutch assembly 10 includes two separate, independently engageable clutches, preferably friction clutches, a torque converter disconnect clutch 24 and a torque converter by-pass clutch 26. The transmission 14 includes a transmission operating mechanism 28 which is preferably in the format of a pressurized fluid actuated shifting assembly of the type disclosed in above-mentioned United States Patent No. 4,445,393. The transmission also preferably includes a power synchronizer assembly 30 which may be of the type illustrated and disclosed in above-mentioned United States Patent Nos. 3,478,851 or 4,023,443.

The above-mentioned power train components are acted upon and monitored by several devices, each of which are known in the prior art and will be discussed in greater detail below. These devices may include a throttle position monitor assembly 32, which senses the position of the operator controlled vehicle throttle pedal or other fuel throttling device, a throttle control 34 which controls the supply of fuel to the engine, an engine speed sensor assembly 36 which senses the rotational speed of the engine, a torque converter disconnect clutch operator 38 which operates the torque converter disconnect clutch 24, a torque converter by-pass clutch operator 40 which operates the torque converter by-pass clutch 26, a transmission input shaft speed sensor 42, a transmission output shaft speed sensor 44, a transmission shifting mechanism operator 46 for controlling the operation of transmission shifting mechanism 28 and/or a power synchronizer mechanism actuator 48 for controlling the operation of power synchronizer mechanism 30.

The above-mentioned devices supply information to and/or accept commands from an electronic central processing unit ("CPU") 50. The central processing unit or controller 50 is preferably based on a digital microprocessor, the specific configuration and structure of which form no part of the present invention. The central processing unit 50 also receives information from a shift control or mode selector assembly 52 by which the operator may select a reverse (R), a neutral (N) or several forward drive (D, $D_L$) modes of operation of the vehicle. Typically, the D mode of operation is for on-highway vehicle travel while the $D_L$ mode of operation is for off-road operation. Alternatively, a separate on-highway/off-highway selector switch may be provided. An electrical power source (not shown) and/or source of pressurized fluid (not shown) provides the electrical and/or pneumatic power the various sensing, operating and/or processing unit. Drive train components and controls therefor of the type described above are known in the prior art and may be appreciated in greater detail by reference to United States Patent Nos. 3,776,048; 3,038,889; 4,226,295 and 4,361,060, the disclosures of which are incorporated by reference.

As is known, the central processing unit 50 receives inputs from the various sensors and/or operating devices. In addition to these direct inputs, the central processing unit 50 may be provided with circuitry and/or logic for differentiating the input signals to provide calculated signals indicative of the rate of change of the various monitored devices, means to compare the input signals and/or memory means for storing certain input information, such as the direction of the last shift, and means for clearing the memory upon occurrence of predetermined events. Specific circuitry for providing the above-mentioned functions is known in the prior art and an example thereof may be seen by reference to above-mentioned United States Patent No. 3,361,060 and/or by reference to a technical paper titled "The Automation of Mechanical Transmissions" published at pages 11-23 of Section IX of the published proceedings of a joint IEEE/SAE conference titled International Congress on Transportation Electronics, IEEE Catalog Number 84CH1988-5.

As is known, a purpose of the central processing unit 50 is to select, in accordance with predetermined logic rules such as a program (software and/or firmware) and current or stored parameters, the optimum gear ratio at which the transmission 14 should be operating and, if necessary, to command a gear change, or shift, into the selected optimum gear ratio. Ideally, an electronically controlled transmission can be programmed to enhance specific vehicle characteristics, such as fuel economy or performance. Selection of the D (on-highway drive) mode on the shift selector 52 by the driver indicates to the central processing unit 52 that peak performance is not required. In this mode, assuming transmission 14 provides nine selectable forward drive ratios ranging from about 12:1 to about 0.9:1, the gear selection subsystem may select fourth or fifth gear as a starting gear and select subsequent shifts, both upshifts and downshifts, according to what are referred to as the on-highway shift profiles which are intended to enhance fuel economy. Similarly, selection of the $D_1$ (off-highway drive) mode on the shift selector indicates to the central processing unit 50 a desire to operate at peak performance at the expense of fuel economy. In this mode of operation, the gear selection subsystem may select low gear or first gear as the starting gear in subsequent shifts, both upshifts and downshifts, at least in the lower gear ratios, will be according to what are referred to as the off-highway shift profiles which are intended to enhance vehicle performance at the expense of vehicle fuel economy.

A more detailed schematic illustration of the torque converter 20 and torque converter disconnect and by-pass clutch assembly 10 drivingly interposed engine 16 and automatic change gear transmission 14 may be seen by reference to Fig 1. The torque converter assembly 20 is conventional in that it includes a fluid coupling of the torque converter type having an impeller 54 driven by the engine output or crank shaft 56 through a shroud 58, a turbine 60 hydraulically driven by the impeller and a stator or runner 62 which becomes grounded to a housing 64 via a one-way roller clutch 66 carried by a shaft 68 grounded to the housing 64. Shroud 58 also drives a pump 70 for pressurizing the torque converter, lubricating the transmission, selectively pressuring the transmission shifting mechanism 28 and/or power synchronizing mechanism 30 and/or operating the disconnect and by-pass clutches 24 and 26. Pump 70 may be of any known structure such as, for example, a well known crescent gear pump.

The transmission 14 includes an input shaft 72 driven by the engine 16 via the torque converter assembly 20 and/or disconnect and by-pass clutch assembly 10. Transmission input shaft 72 carries a connecting member 74 fixed thereto for rotation therewith. Connecting member 74 includes a first portion 76 associated with the torque converter disconnect clutch 24 and a second portion 78 associated with the torque converter by-pass clutch 26. Briefly, as will be described in greater detail below, torque converter disconnect clutch 24 may be engaged or disengaged, independently of engagement or disengagement of by-pass clutch 26, to frictionally engage or disengage, respectively, the torque converter turbine 60 from the transmission input shaft 72 via portion 76 of connecting member 74. Torque converter by-pass clutch 26 may be frictionally engaged or disengaged, independent of the engagement or disengagement of disconnect clutch 24, to frictionally engage the engine crankshaft 56, and shroud 58 driven thereby, to the transmission input shaft 72 via member 78 of connecting member 74.

Engagement of torque converter by-pass clutch 26 will engage the engine crankshaft 56, via shroud 58, directly with the transmission input shaft 72, regardless of the engaged or disengaged condition of torque converter disconnect clutch 24, and thus provides an effective by-pass for by-passing the torque converter 20 and driving transmission 14 directly from the engine 16. If the torque converter by-pass clutch 26 is disconnected, and the torque converter disconnect clutch 24 is engaged, the transmission 14 will be driven from engine 16 via the torque converter fluid coupling as is well known in the prior art. If the torque converter by-pass clutch 26 is disengaged and the torque converter disconnect clutch 24 is also disengaged, the transmission input shaft 72 is drivingly disengaged from any drive torque supplied by the engine or any inertial drag supplied by the torque converter. Disconnecting of the transmission input shaft 72 from the inertial affects of the engine and/or torque converter allows the rotational speed of the input shaft 72, and all transmission gearing drivingly connected thereto, to be accelerated or decelerated by the transmission power synchronizer mechanism 30 in a more rapid manner for purposes of more rapidly achieving synchronization during a downshift or upshift of the transmission and also allows the power synchronizer to cause the input shaft 72 to rotate at a rotational speed greater than any governed engine speed.

It is noted that transmission 14 is of the mechanical transmission type utilizing positive jaw type clutches. Positive clutches of this type are relatively compact and inexpensive as compared to frictional clutches and are very reliable if utilized in connection with some type of synchronizing means such as individual synchronizers and/or a power synchronizing mechanism. With positive type clutches, it is necessary and/or highly desireable that the driving torque and inertial forces on input shaft 72 be minimized when the jaw clutch members are to be disengaged from the previously engaged gear ratio and then re-engaged in the selected new gear ratio. Accordingly, when a fluid coupling such as a fluid torque converter is drivingly interposed between a drive engine and a positive mechanical transmission, it is important that a means to disconnect the transmission input shaft from the fluid coupling be provided.

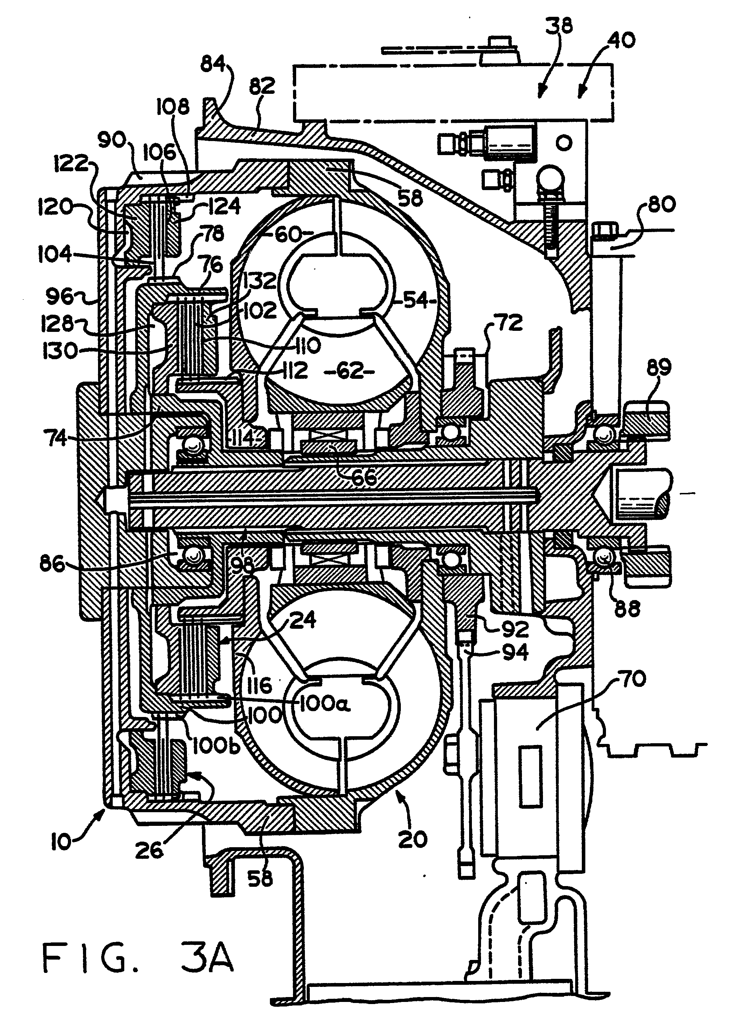

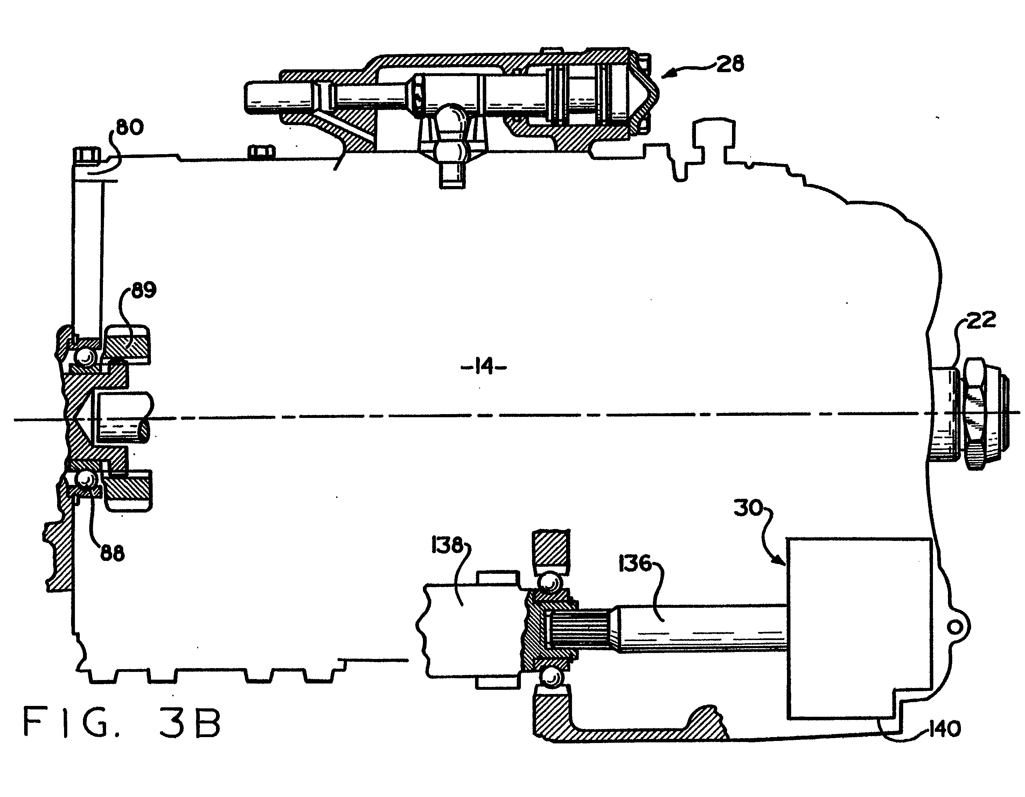

The specific structural details of a preferred embodiment of the torque converter and torque converter disengage and by-pass clutch assembly structure 10 may be seen by reference to Figure 3. Change gear transmission 14 includes a transmission housing 80 having a bell housing portion 82 which encloses the torque converter 20 and disconnect and by-pass clutches, 24 and 26, and which is provided with a flange 84 for attachment to the drive engine. The housing 80 is provided with bearings 86 and 88 for rotatably supporting the input shaft 72 within the housing 80. Input shaft 72 carries transmission input gear 89 fixed for rotation therewith. As discussed above, torque converter 18 includes impeller 54, a turbine 60 and a stator 62 as is well known in the prior art. Stator 66 is supported in the housing by means of a one-way roller clutch 66 as is well known in the prior art. The impeller 54 is fixed for rotation to a shroud member 58 which is adapted to be driven by the engine 16 by means of engine drive splines 90, or the like, which are adapted for driving engagement with complimentary drive splines provided on the engine fly wheel. The gearing and positive clutch structure of transmission 14 is conventional and not illustrated nor described.

The shroud 58, which surrounds assembly 10 and torque converter 20, is also adapted to drive pump 70 as by means of a spur gear 92 constantly engaged with pump drive gear 94. In addition to providing pressurized charging fluid for the torque converter 20, pressurized lubricant for the transmission 14 and actuating fluid for transmission actuating mechanisms 28 and 30, the pump 70 may also provide pressurized fluid for selective engagement and disengagement of the torque converter disconnect clutch 24 and/or torque converter by-pass clutch 26 as will be discussed in greater detail below. For this purpose, housing 80, shaft 72 and/or shroud end cover 96 are provided with fluid passage ways and rotary fluid connections in a manner well known in the prior art.

Torque converter disconnect and by-pass clutch structure 10 comprises a torque converter disconnect clutch 24 which is concentric with and generally surrounded by torque converter by-pass clutch 26 to provide a relatively axially compact structure. The torque converter disconnect and by-pass clutch structure 10 includes a connecting member 74 which is fixed for rotation with the input shaft 72 as at splined connection 98. Connecting member 74 includes a generally axially extending annular shaped wall member 100 having a plurality of inner diameter spline members 100a defining portion 76 and a plurality of outer diameter spline members 100b defining portion 78. A plurality of friction members such as friction discs 102 are carried by splined member 76 for rotation therewith and extend radially inwardly therefrom. A plurality of friction members such as friction discs 104 are carried by splined member 78 and extend radially outwardly therefrom. Friction discs 104 are interleaved with friction discs 106 carried by internal splines 108 on the shroud member 58 and extending radially inwardly therefrom to define a friction disc pack for by-pass clutch 26 as is known in the prior art. Friction discs 102 are interleaved with friction discs 110 fixed for rotation on external splines 112 of a member 114 fixed for rotation with the turbine 60 and extend radially outwardly therefrom to define a clutch disc pack for torque converter disconnect clutch 24. Member 114 is fixed to turbine 60 by means of web member 116 and is rotatably supported on a hub portion 117 of connecting member 74.

An annular axially inwardly extending cylinder 120 is defined in the forward end wall 96 of shroud 58 and receives an annular piston member 122 slideably and sealingly therein. Annular piston 122 and annular reaction member 124 receive the friction discs 104 and 106 axially therebetween for selective engagement and disengagement of by-pass clutch 26. Cylinder 120 may be selectively pressurized and depressurized, to engage and disengage, respectively, torque converter by-pass clutch 26 to connect the engine driven shroud 58 directly to the input shaft 72 via portion 78 of connecting member 74 by pressurized fluid from pump 70 supplied through passages in the cover 82, shaft 72 and/or end cover 96 and controlled by valve structure 40.

Connecting member 74 defines an annular axially inwardly extending cylinder 128 in which an annular piston 130 is sealingly and slidably retained. Annular piston 130 and annular reaction member 132 receive the friction discs 102 and 110 axially therebetween for selective engagement and disengagement of the torque converter disconnect clutch 24. Pressurized fluid from pump 70 may be supplied to or vented from cylinder 128 by means of fluid passages defined in the hood 82, shaft 72 and/or end cover 96 and controlled by valve 38 controlling the flow of fluid to and from pump 70 to cylinder 128 or an hydraulic fluid reservoir (not shown).

As may be seen, annular cylinders 120 and 128 may be individually and independently pressurized and/or vented for independent engagement or disengagement of the torque converter disconnect 24 and/or torque converter by-pass 26 clutches. By utilization of concentric and substantially telescopic clutches 24 and 26 in clutch assembly 10, a relatively axially compact structure is provided allowing a drive system comprising a torque converter fluid coupling to be drivingly interposed a drive engine and a mechanical change gear transmission wherein the transmission may be driven directly from the engine by means of a torque converter by-pass clutch, the transmission may be driven by the engine through the torque converter fluid coupling and/or the transmission may be disconnected from the engine and torque converter for purposes of providing a break in the torque and reduction in input shaft inertia for purposes of more rapidly synchronizing and shifting the transmission.

When the vehicle is at rest with the mode selector in the drive or off-highway drive mode, the disconnect clutch 24 will be engaged and the by-pass clutch 26 disengaged allowing for torque converter start-up with its well known advantages. At above a given vehicle speed and/or gear ratio, the advantages of torque converter operation are no longer required, and the increased efficiency of a direct drive between the drive engine and transmission is required. Under these conditions, the torque converter by-pass clutch 26 will be engaged allowing the transmission input shaft 72 to be driven directly from the engine via the torque converter shroud 58 and connecting member 74.

As discussed above, both clutches 24 and 26 will be disengaged to shift from a previously engaged gear to neutral, to allow the power synchronizer 30 to synchronize the jaw clutch members of the gear to be engaged and to allow engagement of the synchronized jaw clutches of the gear to be engaged.

Selection of the desired gear ratio and selection of the required engaged or disengaged condition of the torque converter disconnect or by-pass clutches, as well as the issuance of command signals to the various clutch and transmission operators is accomplished by the central processing unit 50 in a manner which is known in the prior art and which may be appreciated in greater detail by reference to above-mentioned United States Patent No. 4,361,060.

The power synchronizing mechanism 30 may include a shaft 136 drivingly connected to a transmission countershaft 138 constantly in direct or indirect meshing engagement with the input gear 89 and input shaft 72. Shaft 136 may be selectively frictionally clutched to the housing 80 to decelerate the input shaft 72 and the gearing driven thereby and/or may be selectively frictionally clutched to a speed increasing drive train, such as a planetary speed increasing drive train, 140, driven off the output shaft 22, to accelerate the input shaft 72 and the gearing driven thereby. To achieve and/or maintain exact or substantial synchronization of the transmission jaw clutch members to be engaged, the clutching of the shaft 136 to the housing or to the gear train may be modulated as by pulse width modulation or the like.

## Claims

1. A fluid coupling (20) and clutch (10) structure for a drive system of the type comprising a fluid coupling drivingly interposed a prime mover (16) and the input shaft (72) of a mechanical change gear transmission, (14) said fluid coupling having an input member (54) adapted to be driven by said prime mover and an output member (60) fluidly driven by said input member, also comprising:

a first clutch (24) engageable and disengageable to drivingly connect and disconnect, respectively, said output member (60) to said input shaft (72);

a second clutch (26) engageable and disengageable to drivingly connect and disconnect, respectively, said input member (54) to said input shaft (72); wherein;

said fluid coupling is a fluid torque converter (20), said input member is a torque converter impeller (54), said output member is a torque converter turbine (60), said torque converter (20) further comprising a stator (62), and wherein;

said first and second clutches are friction clutches (24, 26), said structure further comprising a connecting member (74) fixed for rotation with said input shaft (72), said first clutch (24) comprising at least one first friction member (102) having coupling for its rotation with said connecting member and said second clutch (26) comprising at least one second friction member (104) carried for rotation with said connecting member, characterized in that:

said first und second clutches (24, 26) are selectively and independently thus engageable and disengageable, by appropriate means (120); and

said first friction member coupling (128, 130) fixes said first friction member (102) for rotation with said connecting member (74).

2. The structure of claim 1, wherein said first friction member extends radially inwardly from said connecting member and said second friction member extends radially outwardly from said connecting member whereby said first and second clutches are concentric.

3. The structure of claim 1 or 2, wherein said connecting member (74) comprises an axially extending generally tubular portion (100) defining an inner diameter surface and an outer diameter surface, said first friction member extends radially inwardly from said inner diameter surface and said second friction member extending radially outwardly from said outer diameter surface, said first friction member frictionally engageable with a third friction member extending radially outwardly from a sleeve fixed or rotation with said turbine and concentric with and telescopically surrounded by said inner diameter surface to define said first clutch and said second friction member frictionally engageable with a fourth friction member extending radially inwardly from a grounding member fixed for rotation with said impeller to define said second clutch.

4. The structure of claim 3, wherein said impeller is driven by a shroud member (58) surrounding said torque converter and said fourth friction members are rotationally fixed to said shroud member and extend radially inwardly therefrom.

5. The structure of claim 4, wherein said inner and outer diameter surfaces are provided with interior and exterior splines, respectively, and said first and section friction members and comprise a plurality of friction discs carrying exterior and interior splines, respectively, for interengagement with the interior and exterior, respectively, splines provided on the surfaces of said tubular member.

6. The structure of any of claims 1–5, wherein said first and second clutches are at least partially or substantially telescopically related.

7. The structure of claim 6, wherein said torque converter impeller is driven by a torque converter shroud surrounding said torque converter and drivingly engaged by said prime mover, said torque converter shroud additionally driving a fluid pump (70).

8. The structure of claim 7, wherein said first and second clutches are fluid actuated clutches, said actuating fluid is provided by said pump and additionally comprising valving and control means (38, 40) for selectively, independently pressurizing and depressurizing said first and second clutches.

9. The structure of claim 1, wherein said transmission is automatic and includes shift actuators (28), a power synchronizer (30) including a breaking means for reducing the rotational speed of selective transmission members and driving means independent of the prime mover for increasing the rotational speed of selected transmission members and control means (50) for selectively operating said first and second clutches, said shift actuator and said power synchronizer.

10. The structure of claim 2, wherein said impeller is driven by a shroud member surrounding said torque converter and said fourth friction members are rotationally fixed to said shroud member and extend radially inwardly therefrom.

11. An automatic mechanical transmission system comprising:

a throttling device controlled internal combustion enginge (16);

a multi-speed change gear mechanical transmission (14) having an input shaft (72) and an output shaft (22), said transmission utilizing positive clutch means to engage and disengage selected drive ratios between said input and output shafts;

a torque converter (20) drivingly interposed said internal combustion engine and said transmission input shaft, said torque converter including an impeller (54) driven by said engine, a stator (62) and a turbine (60) fluidly driven by said impeller;

shift actuators (28, 30) for selectively engaging and disengaging selected ratios in said transmission;

power synchronizing means for causing substantially synchronous rotation of said positive clutch means, said power synchronizing means including braking means for selectively decreasing the rotational speed of said input shaft and driving means, independent of said internal combustion engine, for selectively accelerating the rotational speed of said input shaft;

control means (50) for receiving inputs and processing same in accordance with predetermined logic rules to issue command outputs, said system further comprising:

a torque converter disconnect and by-pass clutch assembly operable by said control means and including a first friction clutch (24) engageable and disengageable to drivingly connect and disconnect, respectively, said torque converter turbine (60) to said transmission input shaft (72) and a second friction clutch (26) engageable and disengageable, to drivingly connect and disconnect, respectively, said torque converter impeller (54) and said transmission input shaft (72), wherein said assembly comprises a connecting member (74) rotating generally with said input shaft (72), said first friction clutch (24) comprising at least one first friction member (102) carried for rotation with said connecting member and said second friction clutch (26) comprising at least one second friction member (104) carried for rotation with said connecting member; characterized by means (130, 128) to engage or disengage the two clutches (24, 26) selectively and independently of each other, said connecting member (74) and first clutch output means (at 102) being fixed for rotation with said input shaft (72).

12. The system of claim 11, wherein said connecting member (74) comprises an axially extending generally tubular portion (100) defining an inner diameter surface and an outer diameter surface, said first friction member extending radially inwardly from said inner diameter surface and said second friction member extends radially outwardly from said outer diameter surface, said first friction member frictionally engageable with a third friction member extending radially outwardly from a sleeve fixed for rotation with said turbine and concentric with and telescopically surrounded by said inner diameter surface to define said first friction clutch and said second friction member frictionally engageable with a fourth friction member extending radially inwardly from a grounding member fixed for rotation with said impeller to define said second friction clutch.

## Patentansprüche

1. Eine Strömungskupplung (20) und eine mechanische Kupplung (10) enthaltende Anordnung für ein Antriebssystem der eine im Leistungsfluß zwischen einem Primärantrieb (16) und einer Eingangswelle (72) eines mechanischen Stufengetriebes (14) angeordnete Strömungskupplung enthaltenden Bauart, wobei die Strömungskupplung ein Eingangsglied (54), das dazu dient, durch den Primärantrieb angetrieben zu werden, sowie ein Ausgangsglied (60) aufweist, das von dem Eingangsglied mittels eines Fluids angetrieben ist, mit außerdem:
einer ersten ein- und ausrückbaren Kupplung (24), um das Ausgangsglied (60) mit der Eingangswelle (72) antriebsmäßig zu verbinden bzw. voneinander zu entkuppeln;
einer zweiten ein- und ausrückbaren Kupplung (26), um das Eingangsglied (54) mit der Eingangswelle (72) zu verbinden bzw. voneinander zu entkuppeln;
wobei
die Strömungskupplung ein hydrodynamischer Drehmomentwandler (O), das Eingangsglied eine Drehmomentwandlerpumpe (54), das Ausgangsglied eine Drehmomentwandlerturbine (60) ist und der Drehmomentwandler (20) außerdem einen Stator bzw. ein Leitrad (62) enthält, und wobei die erste und die zweite Kupplung Reibungskupplungen (24, 26) sind und die Anordnung außerdem ein zum Umlaufen mit der Eingangswelle (72) daran gehaltertes Verbindungsglied (74), die erste Kupplung (24) zumindest ein erstes Reibungsglied (102) mit Betätigungseinrichtungen zwecks Umlaufen mit dem Verbindungsglied und die zweite Kupplung (26) zumindest ein zweites Reibungsglied (104) aufweist, das zum Umlaufen mit dem Verbindungsglied gehalten ist, dadurch gekennzeichnet,
daß die erste und die zweite Kupplung (24, 26) durch zugeordnete Mittel (120) wahlweise und unabhängig voneinander ein- und ausrückbar sind und
daß die Betätigungseinrichtung (128, 130) des ersten Reibgliedes das erste Reibglied (102) zum Umlaufen mit dem Verbindungsglied (74) festlegt.
2. Anordnung nach Anspruch 1, bei der das erste Reibungsglied sich von dem Verbindungsglied radial nach innen und sich das zweite Reibungsglied von dem Verbindungsglied radial nach außen erstreckt, wobei die erste und die zweite Kupplung zueinander konzentrisch sind.
3. Anordnung nach Anspruch 1 oder 2, bei der das Verbindungsglied (74) einen axial sich erstreckenden, im wesentlichen rohrförmigen Abschnitt (100) aufweist, der eine innere Umfangsfläche und eine äußere Umfangsfläche bildet; bei der sich das erste Reibglied von der inneren Umfangsfläche radial nach innen und sich das zweite Reibglied von der äußeren Umfangsfläche radial nach außen erstreckt; bei der das erste Reibglied mit einem dritten Reibglied reibschlüssig in Eingriff zu bringen ist, das sich von einer Nabe radial nach außen erstreckt, die zum Umlaufen mit der Turbine daran gehaltert und von der Innenumfangsfläche konzentrisch und teleskopartig umgeben ist, um die erste Kupplung zu bilden; und bei der das zweite Reibglied mit einem vierten Reibglied reibschlüssig in Eingriff zu bringen ist, das sich von einem Abstützungsglied radial nach innen erstreckt und zum Umlaufen mit der Pumpe daran befestigt ist, um die zweite Kupplung zu bilden.
4. Anordnung nach Anspruch 3, bei der die Pumpe von einem Gehäuseglied (58) angetrieben ist, das den Drehmomentwandler umgibt, und bei der die vierten Reibglieder drehfest an dem Gehäuseglied sitzen und sich von diesem radial nach innen erstrecken.
5. Anordnung nach Anspruch 4, bei der die Innen- und die Außenumfangsfläche mit einem Innen- bzw. einem Außenkeilprofil versehen sind und die ersten sowie die zweiten Reibglieder eine Vielzahl von Reibscheiben umfassen, die innere bzw. äußere Keilzähne tragen, um mit der inneren bzw. äußeren Keilverzahnung an den Umfangsflächen des rohrförmigen Abschnittes in Eingriff zu stehen.
6. Anordnung nach einem der Ansprüche 1 bis 5, bei der die erste und die zweite Kupplung zumindest teilweise oder weitgehend teleskopartig zueinander angeordnet sind.
7. Anordnung nach Anspruch 6, bei der die Drehmomentwandlerpumpe durch ein Drehmomentwandlergehäuse angetrieben ist, das den Drehmomentwandler umgibt und von dem Primärantrieb angetrieben ist, wobei das Drehmomentwandlergehäuse zusätzlich eine Fluidpumpe (70) antreibt.
8. Anordnung nach Anspruch 7, bei der die erste und die zweite Kupplung fluidbetätigte Kupplungen sind, wobei das Betätigungsfluid von der Pumpe geliefert wird und zusätzlich Ventil- und Steuereinrichtungen (38, 40) vorgesehen sind, um wahlweise und unabhängig voneinander die erste und die zweite Kupplung mit Druck zu beaufschlagen bzw. den Druck wegzunehmen.
9. Anordnung nach Anspruch 1, bei der das Stufengetriebe automatisch geschaltet ist und eine Schaltbetätigungseinrichtung (28), eine Hilfssynchronisiereinrichtung (30) (power synchronizer) mit einer Bremseinrichtung zum Vermindern der Drehzahl bestimmter Getriebeglieder sowie mit einer von dem Primärantrieb unabhängigen Antriebseinrichtung zum Erhöhen der Drehzahl bestimmter Getriebeglieder und Steuermittel (50) enthält, um wahlweise die erste und die zweite Kupplung, die Schaltbetätigungseinrichtung sowie die Hilfssynchronisiereinrichtung zu betätigen.
10. Anordnung nach Anspruch 2, bei der die Pumpe durch ein den Drehmomentwandler umgebendes Gehäuseglied angetrieben ist, und die vierten Reibglieder drehfest mit dem Gehäuseglied verbunden sind und sich radial von diesen nach innen erstrecken.

11. Automatisch geschaltetes mechanisches Getriebesystem mit:

einem durch eine Drosseleinrichtung gesteuerten Verbrennungsmotor (16) mit innerer Verbrennung,

einem mehrgängigen Stufengetriebe (14), das eine Eingangswelle (72) sowie eine Ausgangswelle (22) aufweist und formschlüssige Kupplungseinrichtungen verwendet, um ausgewählte Getriebegänge zwischen der Ein- und der Ausgangswelle einzulegen und herauszunehmen;

einem im Leistungsfluß zwischen dem Verbrennungsmotor mit innerer Verbrennung und der Getriebeeingangswelle angeordneten Drehmomentwandler (20), der eine durch den Motor angetriebene Pumpe, ein Leitrad (62) und eine durch ein Fluid von der Pumpe angetriebene Turbine (60) enthält, einer Schaltbetätigungseinrichtung (28, 30) zum wahlweisen Einlegen und Herausnehmen ausgewählter Gangstufen in dem Getriebe;

einer Hilfssynchronisiereinrichtung (power synchronizer), um eine im wesentlichen synchrone Drehung der formschlüssigen Kupplungseinrichtungen zu erzeugen, wobei die Hilfssynchronisiereinrichtung eine Bremseinrichtung zum wahlweisen Vermindern der Drehzahl der Eingangswelle sowie von dem Verbrennungsmotor mit innerer Verbrennung unabhängige Antriebseinrichtungen enthält, um wahlweise die Drehzahl der Eingangswelle zu erhöhen;

Steuermitteln (50) zum Aufnehmen von Eingangssignalen und Verarbeiten derselben, entsprechend vorbestimmter Regeln, um Ausgangssteuersignale abzugeben, wobei das System außerdem enthält:

eine von der Steuereinrichtung gesteuerte Kupplungsanordnung zum Abkuppeln und Überbrücken eines Drehmomentwandlers, wobei die Kupplungsanordnung zum antriebsmäßigen Ankuppeln bzw. Abtrennen der Drehmomentwandlerturbine (60) an bzw. von der Getriebeeingangswelle (72) eine erste ein- und ausrückbare Reibkupplung sowie eine zweite ein- und ausrückbare Reibkupplung (26) zum antriebsmäßigen Ankuppeln bzw. Abtrennen der Drehmomentwandlerpumpe (54) an bzw. von der Getriebeeingangswelle (72) enthält, und wobei die Anordnung ein im wesentlichen mit der Getriebeeingangswelle (72) umlaufendes Verbindungsglied (74), die erste Reibkupplung (24) wenigstens ein zum Umlaufen mit dem Verbindungsglied gehaltertes Reibglied (102) sowie die zweite Reibkupplung (26) zumindest ein zweites zum Umlaufen mit dem Verbindungsglied gehaltertes zweites Reibglied (104) enthält, dadurch gekennzeichnet, daß Mittel (130, 128) zum Ein- oder Ausrücken der beiden Kupplungen (24, 26) wahlweise und unabhängig voneinander vorhanden sind, und daß das Verbindungsglied (74) sowie Ausgangsmittel (bei 102) der ersten Kupplung zum Umlaufen mit der Getriebeeingangswelle (72) daran befestigt sind.

12. System nach Anspruch 11, bei dem das Verbindungsglied (74) einen axial sich erstreckenden, im wesentlichen rohrförmigen Abschnitt (100) aufweist, der eine innere Umfangsfläche und eine äußere Umfangsflächle bildet; bei der sich das erste Reibglied (70) der inneren Umfangsfläche radial nach innen und sich das zweite Reibglied von der äußeren Umfangsfläche radial nach außen erstreckt; bei der das erste Reibglied mit einem dritten Reibglied reibschlüssig in Eingriff zu bringen ist, das sich von einer Nabe radial nach außen erstreckt, die zum Umlaufen mit der Turbine daran gehaltert und von der Innenumfangsfläche konzentrisch und teleskopartig umgeben ist, um die erste Kupplung zu bilden; und bei der das zweite Reibglied mit einem vierten Reibglied reibschlüssig in Eingriff zu bringen ist, das sich von einem Abstützungsglied radial nach innen erstreckt und zum Umlaufen mit der Pumpe daran befestigt ist, um die zweite Kupplung zu bilden.

**Revendications**

1. Un coupleur hydraulique (20) et un ensemble d'embrayages (10) pour un système d'entraînement comprenant un coupleur hydraulique inséré dans la transmission entre un moteur primaire (16) et l'arbre d'entrée (72) d'une boîte de vitesse mécanique (14), ledit coupleur hydraulique comportant un élément d'entrée (54) adapté pour être entraîné par ledit moteur primaire et un élément de sortie (60) adapté pour être entraîné hydrauliquement par ledit élément d'entrée, comprenant également

un premier embrayage (24) pouvant être embrayé et débrayé respectivement pour établir et supprimer la liaison mécanique d'entraînement entre ledit élément de sortie (60) et ledit arbre d'entrée (72);

un deuxième embrayage (26) pouvant être embrayé et débrayé, respectivement pour établir et interrompre la liaison mécanique d'entraînement entre ledit élément d'entrée (54) et ledit arbre d'entrée (72), où

ledit coupleur hydraulique est un convertisseur de couple hydraulique (20), ledit élément d'entrée est un impulseur de convertisseur de couple (54), ledit élément de sortie est une turbine de convertisseur de couple (60), ledit convertisseur de couple (20) comprenant en outre un stator (62) et où

lesdits premier et deuxième embrayages sont des embrayages à friction (24, 26), ladite structure comprenant en outre un élément de liaison (74) solidaire en rotation avec ledit arbre d'entrée (72), ledit premier embrayage (24) comprenant au moins un premier élément de friction (102) accouplé pour la rotation avec ledit élément de liaison et ledit deuxième embrayage (26) comprenant au moins un deuxième élément de friction (104), fixé pour la rotation audit élément de liaison, caractérisé par le fait que:

lesdits premier et deuxième embrayages (24, 26) peuvent ainsi être mis en prise ou débrayés, sélectivement et indépendamment, à l'aide de moyens adéquats (120), et que ledit premier dispositif d'accouplement par friction (128, 130) fixe ledit premier élément de friction (102) pour que celui-ci tourne avec ledit élément de liaison (74).

2. La structure selon la revendication 1, caractérisé par le fait que ledit premier élément de friction s'étend radialement vers l'intérieur à partir dudit élément de liaison et que ledit deuxième élément de friction s'étend radialement vers l'extérieur, à partir dudit élément de liaison, et que lesdits premier et deuxième embrayages sont concentriques.

3. La structure selon la revendication 1 ou 2, caractérisé par le fait que ledit élément de liaison (74) comprend une portion de forme générale tubulaire (100) s'étendant dans le sens axial et définissant une surface de diamètre intérieur et une surface de diamètre extérieur, et que ledit premier élément de friction s'étend radialement vers l'intérieur et que ledit deuxième élément de friction s'étend radialement vers l'extérieur à partir de ladite surface de diamètre extérieur, que ledit premier élément de friction peut être mis en prise par friction avec un troisième élément de friction qui s'étend radialement vers l'extérieur à partir d'un manchon solidaire en rotation avec ladite turbine, concentrique avec ladite surface de diamètre intérieur et s'engageant dans celle-ci formant avec elle une espèce de structure télescopique définissant ainsi ledit premier embrayage, et que ledit deuxième élément de friction peut être mis en prise avec un quatrième élément de friction s'étendant radialement vers l'intérieur à partir d'un élément de base solidaire en rotation avec ledit impulseur pour définir ledit deuxième embrayage.

4. La structure selon la revendication 3, caractérisée par le fait que ledit impulseur est entraîné par un élément formant boîtier (58) qui entoure ledit convertisseur de couple et que lesdits quatrièmes éléments de friction sont solidaires, en rotation, dudit élément formant boîtier et s'étendent radialement vers l'intérieur, à partir de celui-ci.

5. La structure selon la revendication 4, caractérisée par le fait que lesdites surfaces de diamètre intérieur et de diamètre extérieur comportent respectivement des cannelures intérieures et des cannelures extérieures et que lesdits premier et deuxième éléments de friction comportent un certain nombre de disques de friction avec, respectivement, des encoches à la périphérie extérieure ou à la périphérie intérieure, qui sont en prise avec les cannelures prévues sur les surfaces dudit élément tubulaire.

6. La structure selon l'une quelconque des revendications 1 à 5, caractérisée par le fait que lesdits premier et deuxième embrayages constituent à eux deux, dans une certaine mesure, un ensemble télescopique.

7. La structure selon la revendication 6, caractérisée par le fait que ledit impulseur du convertisseur de couple est entraîné par un boîtier de convertisseur de couple qui entoure ledit convertisseur de couple et qui est rotationnellement en prise avec ledit moteur primaire, ledit boîtier de convertisseur de couple entraînant en outre une pompe à liquide activateur hydraulique (70).

8. La structure selon la revendication 7, caractérisée par le fait que le premier embrayage et le deuxième sont des embrayages à commande hydraulique, le fluide hydraulique de commande étant fourni par ladite pompe, et que des dispositifs de clapets et de commande (38, 40) sont prévus pour appliquer et enlever la pression de commande, sélectivement et indépendamment, sur lesdits premier et deuxième embrayages.

9. La structure selon la revendication 1, caractérisée par le fait que ladite boîte de vitesse est une boîte automatique et qu'elle comprend des dispositifs actionnant le passage des vitesses (28), un synchroniseur de puissance (30) avec des moyens de freinage pour réduire la vitesse de rotation de certains éléments, choisis dans la boîte de vitesses et des moyens d'entraînement indépendants du moteur primaire pour augmenter la vitesse de rotation de certains éléments choisis dans la boîte de vitesses ainsi qu'un système de commande (50) pour manœuvrer sélectivement lesdits premier et deuxième embrayages, ledit mécanisme de passage des vitesses ainsi que ledit synchroniseur de puissance.

10. La structure selon la revendication 2, caractérisée par le fait que ledit impulseur est entraîné par un élément formant boîtier qui entoure ledit convertisseur de couple, et que lesdits quatrième éléments de friction sont solidaires en rotation avec ledit élément boîtier, et qu'ils s'étendent radialement vers l'intérieur à partir de celui-ci.

11. Un système de transmission mécanique automatique comprenant:

— un moteur à combustion interne (16) commandé au moyen d'un accélérateur;

— une boîte de vitesse mécanique à plusieurs rapports (14) avec un arbre d'entrée (72) et un arbre de sortie (22), ladite boîte de vitesses utilisant des dispositifs de crabotage positifs pour mettre en prise ou débrayer des rapports de transmission prédéterminés entre lesdits arbres d'entrée et arbres de sortie;

— un convertisseur de couple (20) inséré dans l'entraînement entre ledit moteur à combustion interne et ledit arbre d'entrée de la boîte de vitesse, ledit convertisseur de couple comportant un impulseur (54) entraîné par ledit moteur, un stator (62) et une turbine (60) entraînée hydrauliquement par ledit impulseur;

— des dispositifs actionnant le passage des vitesses (28, 30), mettant en prise et débrayant les rapports de transmission choisis dans ladite boîte de vitesses;

— des dispositifs synchroniseurs de puissance pour obtenir une rotation pratiquement synchrone desdits éléments de crabotage positif, lesdits dispositifs synchroniseurs de puissance comprenant des moyens de freinage pour réduire sélectivement la vitesse de rotation dudit arbre d'entrée et desdits éléments d'entraînement, ainsi que des moyens d'entraînement, indépendants dudit moteur à combustion interne, pour augmenter sélectivement la vitesse de rotation dudit arbre d'entrée;

— un ensemble de commande (50) pour recevoir des informations d'entrée et pour traiter celles-ci en accord avec des règles de logique prédéterminées et pour fournir des signaux de commande en sortie, ledit système comprenant en outre:

— une combinaison d'embrayages pour le débrayage et pour le pontage du convertisseur de couple, pouvant être commandés par ledit ensemble de commande et comprenant un premier embrayage à friction (24) pouvant être mis en prise ou débrayé, respectivement pour établir la liaison d'entraînement ou pour supprimer celle-ci entre ladite turbine (60) du convertisseur de couple et l'arbre d'entrée (72) de ladite boîte de vitesse, ainsi qu'un deuxième embrayage à friction (26) pouvant être mis en prise ou débrayé, respectivement pour établir la liaison d'entraînement ou pour supprimer celle-ci, entre ledit impulseur (54) du convertisseur de couple et ledit arbre d'entrée (72) de la boîte de vitesse, ladite combinaison comprenant un élément de liaison (74) tournant d'une manière générale avec ledit arbre d'entrée (72), ledit premier embrayage à friction (24) comprenant au moins un premier élément de friction (102) solidaire en rotation avec ledit élément de liaison et ledit deuxième embrayage à friction (26) comprenant au moins un deuxième élément de friction (104) solidaire en rotation avec ledit élément de liaison caractérisé par le fait que des moyens sont prévus (130, 128) pour mettre en prise ou débrayer les deux embrayages (24, 26), sélectivement et indépendamment l'une de l'autre, ledit élément de liaison (74) et l'élément de sortie du premier embrayage (102) étant solidaires en rotation avec ledit arbre d'entrée (72).

12. Le système selon la revendication 11, caractérisé par le fait que ledit élément de liaison (74) comprend une portion de forme générale tubulaire (100) qui s'étend dans le sens axial en définissant une surface de diamètre intérieur et une surface de diamètre extérieur, avec ledit premier élément de friction s'étendant radialement vers l'intérieur à partir de ladite surface de diamètre intérieur et ledit deuxième élément de friction s'étendant vers l'extérieur, radialement, à partir de ladite surface de diamètre extérieur, ledit premier élément de friction pouvant être mis en prise par friction avec un troisième élément de friction s'étendant radialement vers l'extérieur à partir d'un manchon solidaire en rotation avec ladite turbine, concentrique avec ladite surface de diamètre intérieur et emmanché télescopiquement dans celle-ci pour définir ledit premier embrayage à friction, et ledit deuxième élément de friction pouvant être mis en prise par friction avec un quatrième élément de friction qui s'étend radialement vers l'intérieur à partir d'un élément de base solidaire en rotation avec ledit impulseur, pour définir ledit deuxième embrayage à friction.

FIG. 1

FIG. 2

R
N
D
D_L
52

32

12

50
CPU

40

26

10

34  36

10
38

42  46  28  44

E

T/C

24

T

56

16

20

72

14

22

48  30

EP 0 200 335 B1

FIG. 3A

FIG. 3B